# EUROPEAN PATENT SPECIFICATION

(11) **EP 2 675 848 B1**
(45) Date of publication and mention of the grant of the patent: **21.01.2015**
(21) Application number: 12706984.7
(22) Date of filing: 17.02.2012
(51) Int. Cl.: C08L 77/00, C08L 67/00

(54) **POLAR SOLUBLE OXYGEN SCAVENGING COMPOSITIONS**
IN POLAREN POLYMEREN LÖSLICHE, SAUERSTOFFABSORBIERENDE ZUSAMMENSETZUNGEN
DES COMPOSITIONS SOLUBLES DANS DES POLYMERES POLARES QUI ATTRAPENT L'OXYGEN E

(30) Priority: 18.02.2011 US 201161444471 P
(43) Date of publication of application: 25.12.2013
(73) Proprietor: M&G USA Corporation, Apple Grove, WV 25502 (US)
(72) Inventor: KNUDSEN, Ricardo, 04702-000 Sao Paulo (BR); MURRAY, Aaron, Chardon, OH 44024 (US)
(74) Representative: Gerbino, Angelo
(86) International application number: PCT/US2012/025744
(87) International publication number: WO 2012/112957

(56) References cited:
- EP-A1- 0 722 988
- EP-A1- 1 253 171
- EP-A1- 1 704 917
- WO-A2-2011/031929
- US-A1- 2010 316 824
- "Evaluation of polybutadiene scavengers and nylon scavengers in the presence of sulfoisophthalic acid", RESEARCH DISCLOSURE, MASON PUBLICATIONS, HAMPSHIRE, GB, vol. 540, no. 1, 1 April 2009 (2009-04-01) , page 325, XP007138884, ISSN: 0374-4353

## Description

### Priority and Cross References

This application claims priority from United States Provisional Patent Application 61444471 filed 18 Feb 2011.

### Background

The use of scavengers in plastic packaging to increase the barrier to oxygen is well known.

US 20020183448 discloses reacting reactive functionalized polybutadienes with a matrix polyester to form oxygen scavenging preforms and bottles.

The deficiency of this system is that it is still hazy.

While US 20020183448 also discloses unreactive PBD's, it discloses and is known that such PBD's form hazy preforms and bottles.

There exists therefore, the need to have a special PBD which is non-reactive with the polyester polymer matrix resins yet provides a clear (relatively haze free) preform and bottle from blends of PBD-type scavengers and polyesters or nylons.

### Summary

This specification discloses a composition and preform made from that composition wherein the composition comprises a first compound which is a matrix polymer selected from the group consisting of polyesters and nylons, a second compound which is an oxidation catalyst, and a third compound which is a copolymer or oligomer comprising at least one comonomer containing allylic carbons and at least one polar "non-reactive" moiety.

It is further disclosed that the oxidation catalyst is selected from the group consisting of cobalt compounds, manganese compounds, N-Hydroxy Phthalimide and other molecules containing an N-hydroxy cyclic imides and their derivatives and combinations thereof.

The third compound is selected from the group consisting of isoprenes, and butadienes.

It is further disclosed that the matrix polymer may be a polyester selected from the group consisting of polyethylene terephthalate and copolymers of polyethylene terephthalate and that the matrix polymer may also be a crystallizable polyester.

It is further disclosed that the third compound may comprise the reaction product of at least two compounds, the first compound being selected from the group consisting of butadiene and isoprene and the second compound is maleic anhydride.

It is further disclosed that the non-reactive polar moiety is derived from p-aminobenzamide.

It is also disclosed that the third compound may comprise units of styrene.

It is also disclosed that the nylon can be MXD6.

### Brief Description of Figures

Fig. 1 depicts the haze measurement of various embodiments and comparative examples.
Fig. 2 depicts the amount of oxygen ingress into containers made from the various embodiments and comparative examples.

### Detailed Description

This application is to compositions of specially modified polymers and the use of the specially modified polymers in an oxygen scavenger system in blends with polyethylene terephthalate and polyethylene terephthalate copolymers, nylons or other packaging polymers in the presence of a transition metal catalyst such as cobalt or manganese.

Polyesters suitable for this invention are the film forming polyesters made from the reaction of a diol with a dicarboxylic acid, or its corresponding ester. Various copolymers of multiple diols and diacids may also be used. Polyesters containing repeating units of only one chemical composition such as ethylene terephthalate are homopolymers. Polymers with two or more chemically different repeat units in the same macromolecule are termed copolymers. The diversity of the repeat units depends on the number of different types of monomers present in the initial polymerization reaction. In the case of polyesters, copolymers include reacting one or more diols with a diacid or multiple diacids, and are sometimes also referred to as terpolymers.

The term copolymer refers to any polymer with three or more monomers. In the case of PET, the homopolymer is polyethylene terephthalate made from terephthalic acid and ethylene glycol monomers. The addition of isophthalic acid, diethylene glycol, cyclohexane dimethanol or all of them make the PET a copolymer.

It is well known that the polymerization of the dicarboxylic acid with ethylene glycol may also have approximately 1 mole of di-ethylene glycol for the 100 moles of a dicarboxylic acid, 99 moles of ethylene glycol. This is because the diethylene glycol is formed in-situ, and although not charged directly into the reactor it will usually be present in the polymer. It is noted the primary repeating unit of polyethylene terephthalate is ethylene terephthalate, as it is found in the polymer chain. It is the reaction product of ethylene glycol with terephthalic acid or its derivative, the dimethyl ester ofterephthalic acid, known as dimethyl terephthalate. The nomenclature follows with the other phthalates as well. Ethylene isophthalate has the glycol from ethylene glycol and the isophthalate acid moiety which is derived from isophthalic acid. This isophthalate moiety can come from or be derived from isophthalic acid or the dimethyl ester of isophthalic acid - dimethyl isophthalate; ethylene sulfoisophthalate is treated the same way with the sulfoisophthalate being derived from the corresponding sulfoisophthalic acid (SIPA) or the dimethyl ester of the sulfoisophthalic acid, dimethyl sulfoisophthalate (DMSI). As described below the DMSI is often added to the reactors as the bis-hydroxy ester of the sulfoisopthalate as well.

Suitable dicarboxylic acids include those comprising from about 4 to about 40 carbon atoms. Specific dicarboxylic acids include, but are not limited to, terephthalic acid, isophthalic acid, 2,6 naphthalene dicarboxylic acid, cyclohexanedicarboxylic acid, cyclohexanediacetic acid, diphenyl-4,4'-dicarboxylic acid, 1,3-phenylenedioxydiacetic acid, 1,2-phenylenedioxydiacetic acid, 1,4-phenylenedioxydiacetic acid, succinic acid, glutaric acid, adipic acid, azelaic acid, sebacic acid, and the like. Specific esters include, but are not limited to, phthalate esters and naphthalene dicarboxylic diesters. Although the above list refers primarily to dicarboxylic acids, it is well known in the art that one can make the equivalent polyester from the corresponding dimethyl ester. Therefore, the phrase derived from a dicarboxylic acid includes polyesters manufactured using the dimethyl ester of the dicarboxylic acid; e.g. derived from terephthalic acid refers to the terephthalate moiety whether the polyester was manufactured using terephthalic acid or dimethyl terephthalate. The same nomenclature applies to the other monomers as well, such as sulfonates, isophthalates, naphthalates, and sulfoisophthalates.

These acids or esters may be reacted with an aliphatic diol preferably having from about 2 to about 24 carbon atoms, a cycloaliphatic diol having from about 7 to about 24 carbon atoms, an aromatic diol having from about 6 to about 24 carbon atoms, or a glycol ether having from 4 to 24 carbon atoms. Suitable diols include, but are not limited to, ethylene glycol, 1,4-butenediol, trimethylene glycol, 1,6-hexanediol, 1,4-cyclohexanedimethanol, diethylene glycol, resorcinol, and hydroquinone.

Polyfunctional comonomers can also be used, typically in amounts of from about 0.01 to about 3 mole percent. Suitable comonomers include, but are not limited to, trimellitic anhydride, trimethylolpropane, pyromellitic dianhydride (PMDA), and pentaerythritol. Polyester-forming polyacids or polyols can also be used. Blends of polyesters and copolyesters may also be useful in the present invention.

The esterification or polycondensation reaction of the carboxylic acids or esters with glycol typically takes place in the presence of a catalyst. Suitable catalysts include, but are not limited to, antimony oxide, antimony triacetate, antimony ethylene glycolate, organomagnesium, tin oxide, titanium alkoxides, dibutyl tin dilaurate, and germanium oxide. These catalysts may be used in combination with zinc, manganese, or magnesium acetates or benzoates. Catalysts comprising antimony are preferred.

Polyesters of this invention can be prepared by virtually any polymerization procedure suitable for polycondensation polymers. The polyester polymers and copolymers may be prepared by melt phase polymerization involving the esterification, or corresponding transesterification of the diester of the monomers followed by melt phase polymerization vacuum. The melt phase polymerization can be done in a batch, continuous or semi-continuous manner, or even a combination.

After completion of the melt phase polymerization, the polyester is either made into a form such as a film or part or stranded and cut into smaller chips, such as pellets. The polyester is usually then crystallized and subjected to a solid phase (solid state) polymerization (SSP) step to achieve the intrinsic viscosity necessary for the manufacture of certain articles such as bottles. The crystallization and polymerization can be performed in a tumbler dryer reactor in a batch-type system. The solid phase polymerization can continue in the same tumble dryer where the polymer is subjected to high vacuum to extract the polymerization by-products

Alternatively, the crystallization and polymerization can be accomplished in a continuous solid state polymerization process whereby the polymer flows from one vessel to another after its predetermined treatment in each vessel. The crystallization conditions are relative to the polymer's crystallization and sticking tendencies. However, preferable temperatures are from about 100 °C to about 150 °C. In the case of crystallizable polyesters, the solid phase polymerization conditions are generally 10 °C below the melt point of the polymer. In the case of non-crystallizable polyesters, the solid phase polymerization temperature is 10 °C below temperature where the polymer begins sticking to itself. Traditional solid phase polymerization temperatures for crystallizable polymers range from about 200 °C to about 232 °C, and more preferably from about 215 °C to about 232 °C. Those skilled in the art will realize that the optimum solid phase polymerization temperature is polymer specific and depends upon the type and amount of copolymers in the product. However, determination of the optimum solid phase polymerization conditions is frequently done in industry and can be easily done without undue experimentation.

The solid phase polymerization is carried out for a time sufficient to raise the intrinsic viscosity to the desired level, which will depend upon the application. For a typical bottle application, the preferred intrinsic viscosity (I.V.) is from about 0.65 to about 1.0 deciliter/gram.

One suitable class of polyesters for the practice of this invention is the crystallizable terephthalate or naphthalate polyesters defined as a polyester with more than 85 mole % of its acid units being derived from terephthalic acid or 2,6 naphthalene dicarboxylic acid or their respective dimethyl esters. It is generally accepted that to keep the polymer crystallizable the comonomer content is usually kept below about 15 to 20 mole %.

The term crystallizable polyester means that the polyester, such as polyethylene terephthalate can become semi-crystalline, either through orientation or heat induced crystallinity. No plastic is completely crystalline and the crystalline forms are more accurately described as semi-crystalline. The term semi-crystalline is meant to describe a polymer that exhibits X-ray patterns that have sharp features of crystalline regions and diffuse features characteristic of amorphous regions. It is well known in the art that semi-crystalline should be distinguished from the pure crystalline and amorphous states.

One preferred crystallizable polyester is PET, which is the group of polyesters consisting of polyethylene terephthalate, copolymers of polyethylene terephthalate including copolymers of polyethylene terephthalate modified with metal salt of sulfoisophthalate derived from the di-ester or di-carboxylic acid of sulfoisophthalate (SIPA) in the approximately 1:1 stoichiometric reaction of acids, or their di-esters, with ethylene glycol.

Specific copolymers of interest are the crystallizable polyethylene terephthalates which have at least one sulfoisophthalate as an acid moiety and at least one other acid moiety derived from the comonomers selected from the group consisting of isophthalic acid or its diester, 2,6 naphthalene dicarboxylic acid or its diester, and cyclohexane dimethanol. The preferred sulfoisophthalate is lithium sulfoisophthalate with the levels of lithium sulfoisophthalate within the range of 0.05 and 2.0 mole percent based upon the acid moieties of the polyesters in the composition. While greater than 2.0 mole percent is not deleterious to the intended effect, greater than 2.0 mole percent achieves little or no additional improvement.

Another preferred crystallizable polyester is polytrimethylene terephthalate (PTT). It can be prepared by, for example, reacting 1,3-propanediol with at least one aromatic diacid or alkyl ester thereof. Preferred diacids and alkyl esters include terephthalic acid (TPA) or dimethyl terephthalate (DMT). Accordingly, the PTT preferably comprises at least about 80 mole percent of either TPA or DMT. Other diols which may be copolymerized in such a polyester include, for example, ethylene glycol, diethylene glycol, 1,4-cyclohexane dimethanol, and 1,4-butanediol. In addition to the interfacial tension reducing agent such as the metal salt of sulfoisophthalic acid, other aromatic and aliphatic acids which may be used simultaneously to make a copolymer include, for example, isophthalic acid and sebacic acid.

Preferred catalysts for preparing PTT include titanium and zirconium compounds. Suitable catalytic titanium compounds include, but are not limited to, titanium alkylates and their derivatives, titanium complex salts, titanium complexes with hydroxycarboxylic acids, titanium dioxide-silicon dioxide-co-precipitates, and hydrated alkaline-containing titanium dioxide. Specific examples include tetra-(2-ethylhexyl)-titanate, tetrastearyl titanate, diisopropoxy-bis(acetyl-acetonato)-titanium, di-n-butoxy-bis(triethanolaminato)-titanium, tributylmonoacetyltitanate, triisopropyl monoacetyltitanate, tetrabenzoic acid titanate, alkali titanium oxalates and malonates, potassium hexafluorotitanate, and titanium complexes with tartaric acid, citric acid or lactic acid. Preferred catalytic titanium compounds are titanium tetrabutylate and titanium tetraisopropylate. The corresponding zirconium compounds may also be used.

Another preferred crystallizable polyester is polyethylene naphthalate, also known as PEN. It is made by the reaction of 2,6 naphthalene dicarboxylic acid or its diester (2,6 dimethyl naphthalate) with ethylene glycol.

It is also contemplated that the crystallizable polyester of the present invention may comprise recycled polyester or materials derived from post-consumer or post-industrial recycled polyester, such as polyester monomers, catalysts, and oligomers.

The nylon or polyamides suitable for this invention can be described as comprising the repeating unit of amino caproic acid or A-D, wherein A is the residue of a dicarboxylic acid comprising adipic acid, isophthalic acid, terephthalic acid, 1, 4-cyclohexanedicarboxylic acid, or naphthalene dicarboxylic acid, and D is a residue of a diamine comprising m-xylylene diamine, p-xylylene diamine, hexamethylene diamine, ethylene diamine, or 1,4-cyclohexanedimethylamine.

These polyamides can also be described as comprising at least one reaction product selected from the group consisting of the reaction product of amino caproic acid with itself and/or the reaction product of a residue of a dicarboxylic acid comprising adipic acid, isophthalic acid, terephthalic acid, 1,4-cyclohexanedicarboxylic acid, or naphthalene dicarboxylic acid with a residue of a diamine comprising m-xylylene diamine, p-xylylene diamine, hexamethylene diamine, ethylene diamine, or 1,4-cyclohexanedimethylamine.

Those skilled in the art will recognize many of the combinations as well known commercially available polyamides. The reaction product of the residue of sebacic acid with hexamethylene diamine is nylon 6.10 and the reaction product of the residue of adipic acid and hexamethylene diamine is nylon 6.6. Nylon 6.12 is another nylon which benefits from the invention. Nylon 6 is a special type of polyamide having the formula of H₂N-(CH₂)₅-COOH and is made by the opening of caprolactam and then reacting or polymerizing the resulting amino caproic acid with itself. Nylon 6 is a suitable polyamide polymer, as is the reaction product of the residues of adipic acid and m-xylylene diamine, known as poly-m-xylylene adipamide. This compound is commercially known as MXD6 or nylon MXD6.

The polyamide could also be modified and would have a 0.01 - 15 mole percent of the respective acid or diamine replaced with an interfacial tension modifying compound such as sulfonated isophthalic acid, discussed below.

The composition also contains a catalyst for the oxidation reaction of the copolymer/co-oligomer with 02. This catalyst is typically a transition metal compound, Co and Mn compounds being typical examples. The catalyst may also be or include N-hydroxy phthalimide and other molecules containing a N-hydroxy cyclic imides and their derivatives.

The transition metal catalyst is typically a metal salt. Of particular interest are cobalt compounds some of which include cobalt oxide, cobalt acetate, cobalt carbonate, cobalt naphthenate, cobalt oleate, cobalt linoleate, cobalt octoate, cobalt stearate, cobalt nitrate, cobalt phosphate, cobalt sulphate, cobalt (ethylene glycolate), and mixtures of two or more these, among others. As a transition metal catalyst for active oxygen scavenging, a salt of a long chain fatty acid is preferred, which is well known to be a fatty acid having an aliphatic longer than 12 carbon atoms but less than 23 carbon atoms. Cobalt octoate (which is not a long chain fatty acid) or cobalt stearate, which is a long chain fatty acid are preferred.

Examples of the useful cobalt compounds are the cobalt carboxylates, among them stearates, decanoates, octoates, propionates, acetates, including mixed salts of carboxylates (e.g. Co neodecanoate/propionate); halides (chlorides, bromides, iodides); carbonates and bicarbonates; and sulfates.

Examples of the useful manganese compounds are the manganese carboxylates, among them stearates, decanoates, octoates, propionates, acetates, including mixed salts of carboxylates (e.g. Mn neodecanoate/propionate); halides (chlorides, bromides, iodides); carbonates and bicarbonates; and sulfates.

The useful amounts of the transition metal catalyst are expressed as parts per million of the metal in the salt by weight of the composition. Useful ranges are 10 to 5000 ppm, with 20 to 800 ppm and 50 to 500 ppm being more preferred. 80 to 290 ppm being the most preferred range for the amount of transition metal in the composition.

This specially modified polymer is a copolymer or co-oligomer with at least one comonomer containing allylic carbons (butadiene or isoprene) after reaction with and at least one polar "non-reactive" moiety.

While other parts of the molecule may be oxidizable, the comonomer with allylic carbons forms the main oxidizable part of the molecule. "Non-reactive" polar moiety means the polar moiety as claimed that is non-reactive towards the polyester resins employed in the blend.

A non-reactive polar moiety is one in which no reaction with the matrix polymer is detected using IR analysis after 7 parts of the compound with the polar moiety has been melt blended in a mixing chamber (e.g. a Haake machine) with 93 parts of the matrix polymer under nitrogen for a period of 2 minutes at a temperature 15°C higher than the melt point of the matrix polymer without the oxidation catalyst.

For clarification, the limitation of non-reactivity is towards just the polyester. The non-reactive polar moiety can be non-reactive to the matrix polyester but reactive to a nylon or polyamide present in the blend. If blended within a polyester matrix, the non-reactive polar moiety lies within the scope of the invention.

The polar moiety produces a physical compatibilization of the scavenger copolymer/oligomer with the matrix polymer. By compatibilization it is understood that the blend will display an improved transparency (lower haze) over a system not containing such polar moiety. It is believed that the low haze is due to a better dispersion of the scavenger polymer in the matrix, in the form of smaller particles which produce less scattering of light. Without being bound to any theory, it is believed that the polar moieties help to reduce the interfacial tension between the scavenger polymer and the matrix polymer in the blend. Polar moieties contain amides with substituents containing aromatic groups as claimed.

The above described scavenger copolymers/co-oligomers may contain other comonomers to modify their refractive indexes. Such comonomers have higher refractive indices than the aliphatic comonomers employed, increasing the average refractive index of the scavenging copolymer/co-oligomer. The higher refractive index of the scavenger polymer produces a better match with the refractive index of the matrix polymer, contributing to a better transparency of the blends and the products made with them, like bottles and films. Comonomers containing aromatic rings, hetero-aromatic rings, sulfur and/or halogens, amongst others, would be typical for this application. A preferred comonomer would be styrene.

The copolymers/co-oligomers of this invention may be produced by direct polymerization of the appropriate comonomers (e.g. butadiene (BD) + styrene + acrylamide with an N-aromatic or N-benzylic substituent), the polymerization of which is well known in the art.

The copolymers/co-oligomers of this invention may also be produced by the modification of previously prepared copolymers or co-oligomers. For instance, a copolymer or co-oligomer made from BD + Styrene + Maleic Anhydride (MA) (grafted or copolymerized) can be modified by reacting appropriate molecules with the MA moiety (e.g. Amines with different substituents). Another example is the reaction of BD/Styrene/MA copolymer with p-Aminobenzamide, forming the corresponding imide. The side groups formed is both an imide and an amide, of high polarity, which contribute to the compatibilization of the scavenger material with the matrix polymer (e.g. PET).

The amount of the modified copolymer or oligomer is in the range of 0.1 to 5 percent by weight of the total composition. A more useful composition is in the range of 0.15 to 1.5 percent by weight of the total composition. An even more useful amount is in the range of 0.15 to 1.25 percent by weight of the total composition.

The composition is made by melt mixing the matrix polymer, e.g. PET, the catalyst, and the specially modified copolymer or oligomer. Typically this is done in an extruder, at or above the melt point of the matrix polymer. The composition can be pelletized or made directly into an article such as a preform.

### Experimental

Different polybutadiene oligomers (referred to here as PBDs) were tested as oxygen scavengers, in combination with transition metal catalysts (Co and Mn). The PBDs and metal salt masterbatches were blended with commercial bottle grade PET pellets nominally 0.8 dl/g I.V. and the mixture fed to an injection machine to produce 28 g preforms. Preforms were then blow molded to 500 ml bottles, which were analysed for Fibox O₂ barrier analysis and haze measurements.

PBDs can be either butadiene (BD) homopolymers (only BD in the main chain) or copolymers (containing for instance Styrene as a comonomer), without any additional polar moiety. Table 1 presents some characteristics of such control PBDs employed in this study.

**Table 1 - Non-functionalized PBD**

| **Product name** | **Mn** | **Styrene content (%)** | **Supplier** |
|---|---|---|---|
| Ricon 181 | 3200 | 20-30 | Sartomer |
| Ricon 131 | 4500 | 0 | Sartomer |

Additionally, these PBDs may contain a grafted moiety having at least one reactive functional group, typically obtained by the reaction of the PBDs with maleic anhydride (MA) or other unsaturated comonomers.

Table 2 presents the characteristics of some PBDs reacted with MA employed in this study.

**Table 2 - Maleic Anhydride + PBD**

| **Product name** | **Mn** | **average Anhydride groups/ chain** | **Styrene content (%)** | **Supplier** |
|---|---|---|---|---|
| Ricon 131MA5 | 4700 | 2 | 0 | Sartomer |
| Ricon 131MA10 | 5000 | 5 | 0 | Sartomer |
| Ricon 184MA6 | 9100 | 6 | 17-27 | Sartomer |

The PBD-MA control was modified through the reaction of PBD-MA with p-Aminobenzamide (pABA), forming a cyclic imide, as show in the reaction below. In the reaction, the PBD-MA is the copolymer or oligomer with at least one co-monomer containing allylic carbons. The cyclic imide arising from the reaction of the pABA with PBD-MA is the polar, non-reactive moiety. The compound resulting from the reaction is an example of the type of oxygen scavenger of the invention.

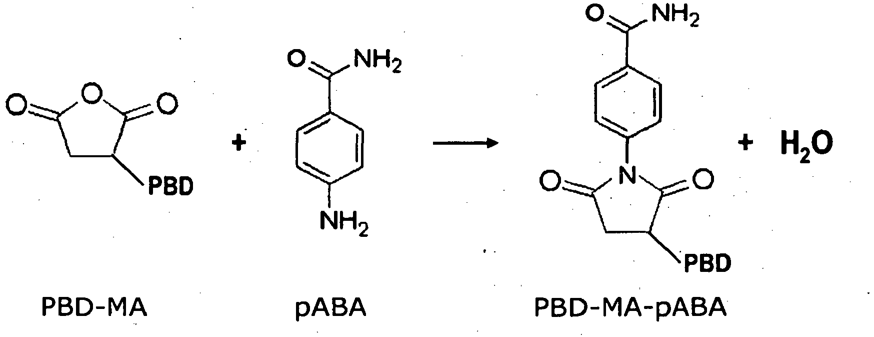

The products were generically named "PBD-MA"-pABA, with the expression "PBD-MA" replaced by the commercial code of the oligomer employed. Stoichiometric amounts of pABA were employed, as compared to the MA groups. So, for instance, 184MA6-pABA is the product obtained from the reaction of Ricon 184MA6 with stoichiometric amounts of pABA.

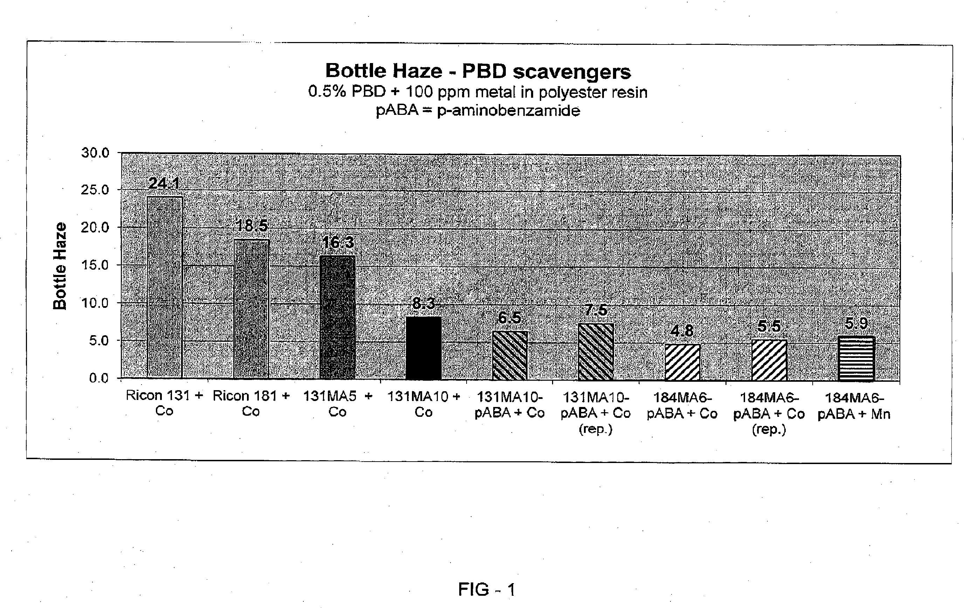

Fig. 1 shows the bottle haze results obtained with different PBDs at 0.5% wt concentration in ClearTuf Turbo LT, a bottle grade commercial PET manufactured by M&G. Bottles obtained with non-functionalized PBDs, Ricon 131 (PBD homopolymer) and Ricon 181 (PBD/Styrene copolymer) are clearly very hazy. This is certainly due to the poor dispersion of these non-polar PBDs into the PET.

Fig. 1 also shows that grafting MA into PBD reduces bottle haze. Haze reduction is a function of MA amount. It is worthwhile to mention that bottles made with Ricon 131MA5 are considerably hazier than the ones made with Ricon 131MA10, due to the increased compatibilization through chemical reactions.

Interestingly, bottles produced with PBD-MA-pABA had low haze and are at least as good as the ones produced with PBD-MA (or slightly better), as seen in Fig. 1. So, physical compatibilization here was at least as effective as the best cases tested with chemical compatibilization.

In the experiments the PBDs containing styrene as a comonomer produced lower haze bottles.

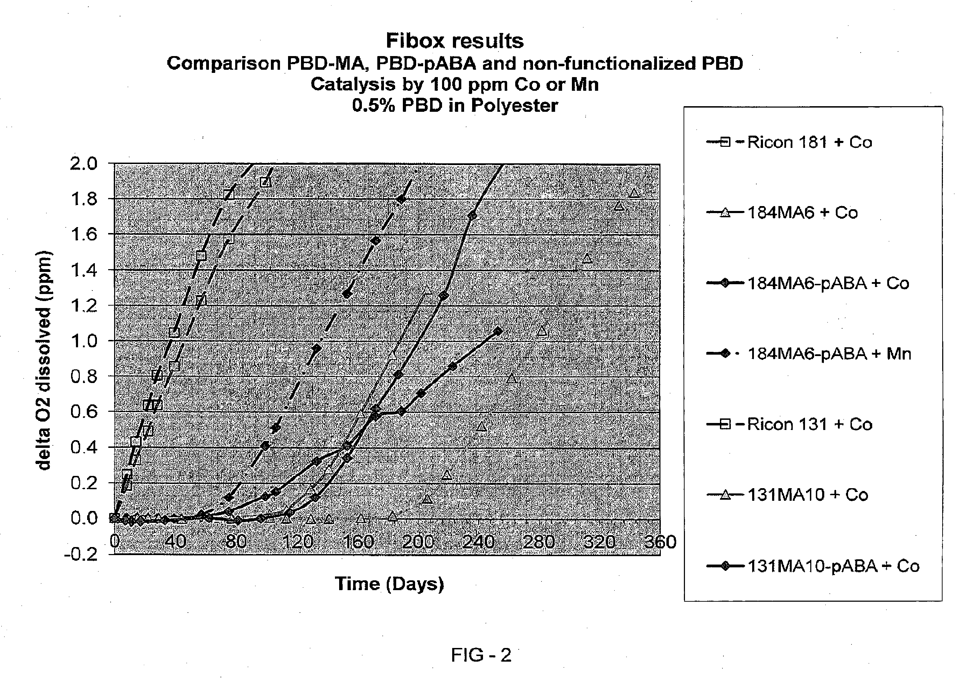

Fig. 2 shows oxygen ingress amounts based upon the Fibox analysis method for different PBDs. It is readily apparent that the non-functionalized PBDs (Ricons 131 and 181) were not active as O₂ scavenger substrates, while the ones containing either MA or MA-pABA were quite active thus indicating that that polar groups are favorable to the oxidation of these PBDs. It is demonstrated also that Mn can be an active catalyst, although slightly less active than Co (compare samples 184MA6-pABA + Co with 184MA6 - pABA + Mn).

PBDs containing styrene were less active than the ones containing only BD in the main chain. This was expected, since BD polymers are in general more oxidizable than styrene polymers.

## Claims

1. A composition comprising:
- a first compound which is a matrix polymer selected from the group consisting of polyesters and nylons,
- a second compound which is an oxidation catalyst, that is selected in the group consisting of transition metal compounds, any molecule containing a N-hydroxy cyclic imide and their derivatives and combinations,
- a third compound in the range of 0.1 to 5% by weight of the total composition, which is a copolymer or co-oligomer comprising at least one comonomer containing allylic carbons and at least one polar "non-reactive" moiety,
wherein said at least one comonomer containing allylic carbons is isoprene or butadiene, and
wherein the non-reactive polar moiety is derived from p-aminobenzamide, and the polar "non-reactive" moiety is one in which no reaction with the polyester matrix polymer is detected using IR analysis after 7 parts of the compound with the polar moiety has been melt blended in a mixing chamber with 93 parts of the polyester matrix polymer under nitrogen for a period of 2 minutes at a temperature 15 °C higher than the melt point of the matrix polymer without the oxidation catalyst.

2. The composition according to claim 1, wherein the oxidation catalyst is selected from the group consisting of cobalt compounds, manganese compounds, N-hydroxy phthalimide and other molecules containing an N-hydroxy cyclic imide and their derivatives and combinations thereof.

3. The composition according to any of claims 1 to 2, wherein the matrix polymer is a polyester selected from the group consisting of polyethylene terephthalate and copolymers of polyethylene terephthalate.

4. The composition according any of claims 1 to 3, wherein the matrix polymer is a crystallizable polyester.

5. The composition according to any of claims 1 to 4 wherein said third compound is a polybutadiene-maleic anhydride modified by reaction with p-aminobenzamide.

6. The composition according to any of claims 1 to 5, wherein the third compound comprises units of styrene.

7. The composition according to any of claims 1 to 6, wherein the nylon is MXD6.

8. The composition according to any of claims 1 to 7, wherein said third compound is present in the range of 0.15 to 1.5%, preferably 0.15 to 1.25%, by weight of the total composition.

9. A preform comprising the composition of any of claims 1 to 8.

## Patentansprüche

1. Zusammensetzung, umfassend:
- eine erste Verbindung, die ein Matrix-Polymer ist, das aus der Gruppe, bestehend aus Polyestern und Nylons, ausgewählt ist,
- eine zweite Verbindung, die ein Oxidationskatalysator ist, der in der Gruppe, bestehend aus Übergangsmetallverbindungen, jeglichem Molekül, das ein zyklisches N-Hydroxyimid enthält, und deren Derivaten und Kombinationen, ausgewählt ist,
- eine dritte Verbindung im Bereich von 0,1 bis 5 Gew.%, bezogen auf die Gesamtzusammensetzung, die ein Copolymer oder Co-Oligomer ist, das mindestens ein Comonomer umfasst, welches Allylkohlenstoffe enthält, und mindestens einen polaren "nicht reaktiven" Rest,
wobei es das mindestens eine Allylkohlenstoffe enthaltende Comonomer Isopren oder Butadien ist und
wobei der nicht reaktive polare Rest von p-Aminobenzamid abgeleitet ist und der polare "nicht reaktive" Rest ein solcher ist, bei dem keine Reaktion mit dem Polyestermatrix-Polymer mittels IR-Analyse nachgewiesen wird, nachdem 7 Teile der Verbindung mit dem polaren Rest in einer Mischkammer mit 93 Teilen des Polyestermatrix-Polymers unter Stickstoff bei einer Temperatur, die 15°C über dem Schmelzpunkt des Matrix-Polymers ohne Oxidationskatalysator liegt, für einen Zeitraum von 2 Minuten in der Schmelze gemischt wurden.

2. Zusammensetzung gemäß Anspruch 1, wobei der Oxidationskatalysator aus der Gruppe, bestehend aus Kobaltverbindungen, Manganverbindungen, N-Hydroxyphthalimid und anderen Molekülen, die ein zyklisches N-Hydroxyimid enthalten, sowie deren Derivaten und Kombinationen davon, ausgewählt ist.

3. Zusammensetzung gemäß einem der Ansprüche 1 bis 2, wobei das Matrix-Polymer ein Polyester ist, der aus der Gruppe, bestehend aus Polyethylenterephthalat und Copolymeren von Polyethylenterephthalat, ausgewählt ist.

4. Zusammensetzung gemäß einem der Ansprüche 1 bis 3, wobei das Matrix-Polymer ein kristallisierbarer Polyester ist.

5. Zusammensetzung gemäß einem der Ansprüche 1 bis 4, wobei die dritte Verbindung ein durch Reaktion mit p-Aminobenzamid modifiziertes Polybutadien-Maleinsäureanhydrid ist.

6. Zusammensetzung gemäß einem der Ansprüche 1 bis 5, wobei die dritte Verbindung Styrol-Einheiten umfasst.

7. Zusammensetzung gemäß einem der Ansprüche 1 bis 6, wobei der Nylon MXD6 ist.

8. Zusammensetzung gemäß einem der Ansprüche 1 bis 7, wobei die dritte Verbindung im Bereich von 0,15 bis 1,5 Gew.%, vorzugsweise von 0,15 bis 1,25 Gew.%, bezogen auf die Gesamtzusammensetzung, vorhanden ist.

9. Vorformling, umfassend die Zusammensetzung nach einem der Ansprüche 1 bis 8.

## Revendications

1. Composition comprenant :
- un premier composé qui est un polymère de matrice choisi dans le groupe constitué de polyesters et de nylons,
- un second composé qui est un catalyseur d'oxydation, lequel est choisi dans le groupe constitué de composés de métaux de transition, d'une molécule quelconque contenant un imide N-hydroxy cyclique et de leurs dérivés et combinaisons,
- un troisième composé dans l'intervalle de 0,1 à 5 % en poids de la composition totale, lequel est un copolymère ou co-oligomère comprenant au moins un comonomère contenant des carbones alicycliques et au moins une moitié "non-réactive" polaire,
dans laquelle ledit au moins un comonomère contenant des carbones alicycliques est l'isoprène ou le butadiène, et
dans laquelle la moitié polaire non-réactive est dérivée de p-aminobenzamide, et la moitié "non réactive" polaire est une dans laquelle aucune réaction avec le polymère de matrice de polyester est détectée en utilisant une analyse IR après que 7 parties du composé avec la moitié polaire ont été combinées à l'état de fusion dans une chambre de mélange avec 93 parties du polymère de matrice de polyester sous azote sur une durée de 2 minutes à une température de 15°C supérieure au point de fusion du polymère de matrice sans le catalyseur d'oxydation.

2. Composition selon la revendication 1, dans laquelle le catalyseur d'oxydation est choisi dans le groupe constitué de composés de cobalt, de composés de manganèse, de N-hydroxy phthalimide et d'autres molécules contenant un imide N-hydroxy cyclique et leurs dérivés et combinaisons de ceux-ci.

3. Composition selon l'une quelconque des revendications 1 à 2, dans laquelle le polymère de matrice est un polyester choisi dans le groupe constitué de polyéthylène téréphthalate et de copolymères de polyéthylène téréphthalate.

4. Composition selon l'une quelconque des revendications 1 à 3, dans laquelle le polymère de matrice est un polyester cristallisable.

5. Composition selon l'une quelconque des revendications 1 à 4, dans laquelle ledit troisième composé est un polybutadiène-anhydride maléique modifié par réaction avec du p-aminobenzamide.

6. Composition selon l'une quelconque des revendications 1 à 5, dans laquelle le troisième composé comprend des unités de styrène.

7. Composition selon l'une quelconque des revendications 1 à 6, dans laquelle le nylon est MXD6.

8. Composition selon l'une quelconque des revendications 1 à 7, dans laquelle ledit troisième composé est présent dans l'intervalle de 0,15 à 1,5 %, de préférence de 0,15 à 1,25 %, en poids de la composition totale.

9. Ebauche comprenant la composition selon l'une quelconque des revendications 1 à 8.
